# EUROPEAN PATENT SPECIFICATION

(11) **EP 1 878 616 B1**
(45) Date of publication and mention of the grant of the patent: **11.11.2009**
(21) Application number: 07075523.6
(22) Date of filing: 27.06.2007
(51) Int. Cl.: B60Q 1/52, B60K 28/06

(54) **Vehicle light warning system and method**
Warnleuchtesystem und Warnleuchteverfahren für fahrzeug
Système et procédé de voyant avertisseur pour véhicule

(30) Priority: 14.07.2006 US 486494
(43) Date of publication of application: 16.01.2008
(73) Proprietor: Delphi Technologies, Inc., Troy, Michigan 48007 (US)
(72) Inventor: Smith, Matthew R., Westfield, IN 46074 (US); Witt, Gerald J., Carmel, IN 46032 (US); Zhang, Harry, Chandler, AZ 85249 (US)
(74) Representative: Denton, Michael John

(56) References cited:
- DE-A1- 10 161 262
- US-A1- 2002 011 925
- US-A1- 2004 090 317
- US-A1- 2005 219 041
- US-B1- 6 876 307

## Description

### Technical Field

The present invention generally relates to warning systems and, more particularly, relates to a visual warning display for warning the driver of a vehicle.

### Background of the Invention

Vehicles are increasingly being equipped with various systems that provide a warning to the driver of the vehicle based on sensed conditions. For example, forward collision warning (FCW) systems have been proposed to predict a potential collision, such as with another vehicle, and to warn the vehicle operator of such potential collision. Lane departure warning (LDW) systems have also been proposed to monitor departure of the vehicle from a current lane and to warn the driver of such condition. Further, head pose monitor (HPM) systems have been employed to detect the driver head orientation, such as to determine if the driver is distracted.

The aforementioned and other proposed vehicle systems generally include a warning system for warning the driver of the vehicle of such determined conditions. Conventional warning systems typically include displaying a visual icon on a display screen. Other warning systems may employ an auditory warning such as an audible alarm signal or computer generated voice instructions.

In some cases, the conventional means for warning the driver of the vehicle of a detected condition may instead result in an additional distraction to the driver. For example, in a forward collision warning system, an icon displayed on a screen or on a head-up display may instead encourage the driver to look at a non-frontal location for a small, but significant amount of time. Even though the time spent looking at the warning icon may be small, but usually greater than half a second, the driver may be distracted. In addition to being annoying, auditory warnings may not be particularly effective for gaining the driver's attention in imminent threat situations. As such, many conventional warnings do not necessarily reveal any significant change in reaction time for either distracted or non-distracted drivers.

Accordingly, it is therefore desirable to provide for a warning system for use on a vehicle to warn the driver of the vehicle of a detected condition in a manner that is not too distractive. In addition, it is desirable to provide a warning system that easy to implement and cost-effective.

US-A-2005/219041 discloses a system and method in accordance with the preambles of claims 1 and 12 respectively.

### Summary of the Invention

A system in accordance with the present invention is defined by the features specified in claim 1. A method in accordance with the present invention is defined by the features specified in claim 12.

In accordance with the teachings of the present invention, a light warning system for a vehicle and a method of warning a driver of the vehicle are provided. According to one aspect of the present invention, the light warning system includes a lighting device for generating a light beam in a region viewable to a passenger in the vehicle. The system also includes a detection device for detecting a condition desirable of a warning and generating a warning signal. The system further includes a controller processing the warning signal and determining whether to present a light beam warning displayed to the driver. The controller controls the lighting device to generate a flashing light beam, wherein the light beam flashes on for a time period of less than one-half second.

According to another aspect of the present invention, a light warning system for a vehicle is provided that includes a lighting device located on a vehicle for generating a light beam on a windshield of the vehicle in a region viewable to a driver of a vehicle. The system also has a detection device for detecting a condition desirable of a warning and generating a warning signal. The system further includes a controller processing the warning signal and determining whether to present a light beam warning to the driver of the vehicle. The controller controls the lighting device to generate a flashing light beam, wherein the light beam flashes on for a time period of less than one-half second.

According to a further aspect of the present invention, a method of warning a driver of a vehicle is provided. The method includes the step of detecting a condition desirable of a warning and generating a warning signal indicative thereof. The method also includes the step of generating a light beam in a region viewable to a driver of the vehicle upon detecting a condition desirable of a warning. The method further includes the step of controlling the lighting device to generate a flashing light beam, wherein the light beam flashes on for a time period less than one-half second.

Accordingly, the light warning system and method of the present invention advantageously provides a cost-effective light warning to the driver of the vehicle in an attempt to focus the driver's attention, while not being overly distractive.

These and other features, advantages and objects of the present invention will be further understood and appreciated by those skilled in the art by reference to the following specification, claims and appended drawings.

### Brief Description of the Drawings

The present invention will now be described, by way of example, with reference to the accompanying drawings, in which:
FIG. 1 is a side view of a vehicle passenger compartment illustrating a light warning system installed in the vehicle in front of the driver according to one embodiment of the present invention;
FIG. 2 is a forward looking view of the windshield illustrating the light warning displayed thereon;
FIG. 3 is a block diagram illustrating the light warning system according to one embodiment of the present invention;
FIG. 4 is a flow diagram illustrating a routine for controlling the warning light display; and
FIG. 5 is a flow diagram illustrating a routine for controlling the brightness of the lighting device.

### Description of the Preferred Embodiments

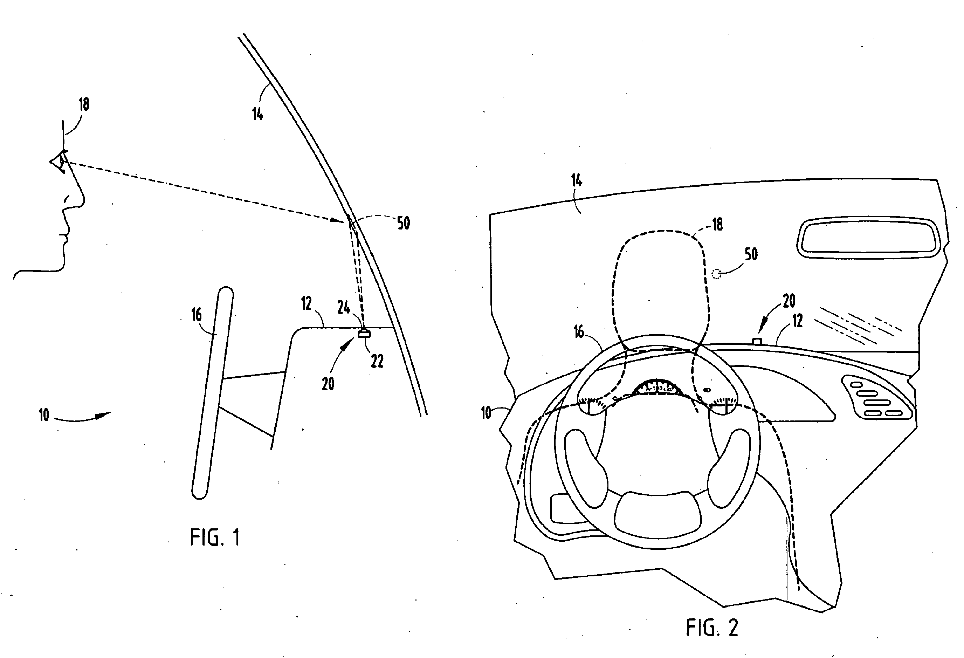

Referring to FIGS. 1 and 2, the passenger compartment of a vehicle 10 is generally illustrated equipped with a light warning system 20 according to one embodiment of the present invention. A passenger, particularly a driver 18, of the vehicle 10 is shown seated in front of the steering wheel 16 for controlling driving operations of the vehicle 10. The vehicle 10 has a windshield 14 that is visually transmissive to allow the driver 18 to view the roadway forward of the vehicle 10. The vehicle 10 also has a dash 12 generally positioned below the windshield 14 and forward of the steering wheel 16.

The light warning system 20 employs a lighting device 22 mounted in the dash 12 and oriented to generate and focus a light beam 50 onto the windshield 14 in a region viewable to the driver 18 of the vehicle 10. The light beam 50 is projected generally forward of the driver looking forward toward the roadway in front of the vehicle 10, according to the disclosed embodiment, so as to draw the driver's attention to the driving area of interest. More specifically, the light beam 50 is illuminated on the windshield 14 viewable on or near the horizon forward of the driver 18 and centered laterally. The light warning system 20 provides an exogenous visual warning displayed on the windshield for a short duration in an attempt to notify the driver of a determined warning condition.

The lighting device 22 includes one or more light beam generators and may include a lens 24 for projecting the generated light onto the windshield 50. In the embodiment shown, the lighting device 22 is angled just slightly toward the driver 18 so that when the light beam 50 is reflected off of the windshield 14, the light beam reflects approximately parallel to the ground. However, it should be appreciated that the lighting device 22 may be located elsewhere in the vehicle 10 to provide a light beam 50 that is visible to the driver 18 of the vehicle 10 in accordance with the teachings of the present invention.

In the embodiment shown, the lighting device 22 generates a single flashed light beam 50 responsive to a warning condition. The flashed light beam 50 is reflected from the windshield 14 and in a region that is viewable directly in front of the driver 18 of the vehicle 10. The warning light beam 50 may be a spot beam according to one embodiment. According to another embodiment, the light beam 50 may be a ring or circular beam such as a halo. According to other embodiments, the light beam 50 may be provided in various shapes, sizes, colors and brightness.

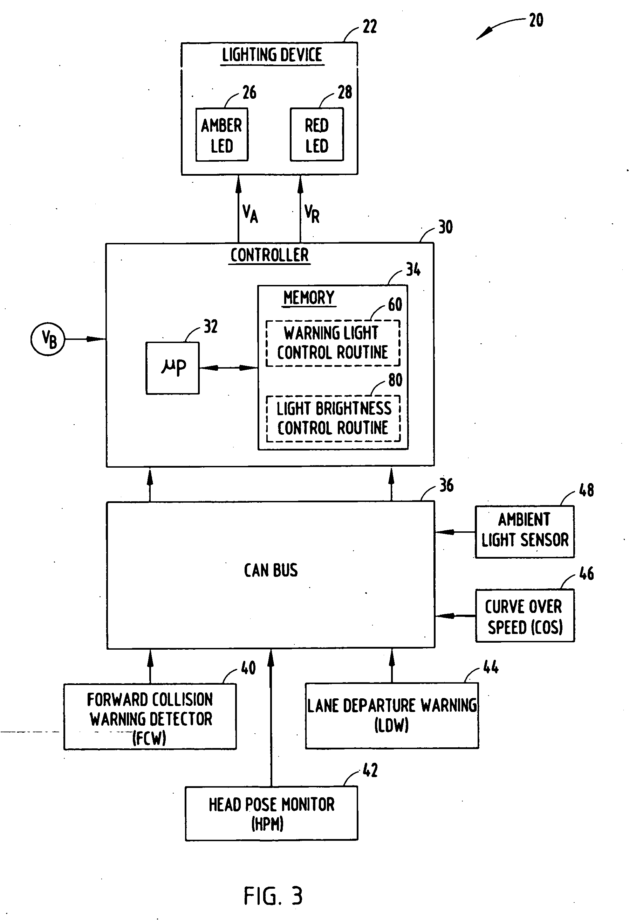

Referring to FIG. 3, the light warning system 20 is illustrated having a lighting device 22 made up of two light generating devices, namely an amber light emitting diode (LED) 26 and a red colored light emitting diode (LED) 28. The amber colored LED 26 produces an amber color light beam so that it may be used as a cautionary (less urgent) threat warning light, while the red colored LED 28 produces a red color light beam that may be used as a more imminent (more urgent) threat warning light. According to one example, the LEDs 26 and 28 may employ single Osram Dragon LED, with or without a lens. Any number of light generating sources may be employed.

The amber and red colored LEDs 26 and 28 are controlled via respective voltages V_{A} and V_{R}, respectively provided by controller 30. The controller 30 receives a power voltage, such as a battery voltage V_{B} and generates the LED voltages V_{A} and V_{R}. The controller 30 includes a microprocessor 32 and memory 34. The microprocessor 32 may include any known processing capability for processing one or more routines to determine a warning threat condition and control the lighting device 22 to provide the appropriate light warning. Memory 34 may include any known memory and is shown programmed with a warning light control routine 60 and a light brightness control routine 80. The controller 30 may be a dedicated controller dedicated to providing light warnings, or may be shared with any of a number of other systems. The controller 30 may be implemented in analog or digital circuitry.

The light warning system 20 is shown having a number of detecting or detection warning devices including a forward collision warning (FCW) detector 40, a head pose monitor (HPM) 42, a lane departure warning (LDW) 44, and a curve over speed (COS) 46. Additionally, the light warning system 20 includes an ambient light sensor 48 for sensing ambient lighting conditions. The ambient light sensor 48 may also be located in the dash 12 near the bottom of the windshield 14, as is conventionally provided on a vehicle 10. The various detecting devices may include conventional vehicle condition detection and warning devices and systems. The forward collision warning system 20 provides a warning signal indicative of a potential collision forward of the vehicle 10 and generates a warning signal that is input to the controller 30 via the CAN bus 36. Similarly, the head pose monitor 42 monitors the driver head pose directivity and provides a warning signal indicative of a potential distractive condition of the driver 18 that is input to the controller 30 via the CAN bus 36. The head pose monitor 42 may also provide head pose directivity of the driver 18 to the controller 30 such that the orientation of the driver's head is available. The lane departure warning system 44 detects a departure of the vehicle 10 from its current lane and provides a warning signal to the controller 30 via the CAN bus 36. The curve over speed system 46 detects presence of an excessive speed as the vehicle 10 is approaching a curve in the roadway forward of the vehicle 10 and provides a warning system to the controller 30 via the CAN bus 36. These and other detection systems may be employed as inputs to the controller 30 with or without the CAN bus 36, any of which may require a light warning signal to be provided according to the present invention.

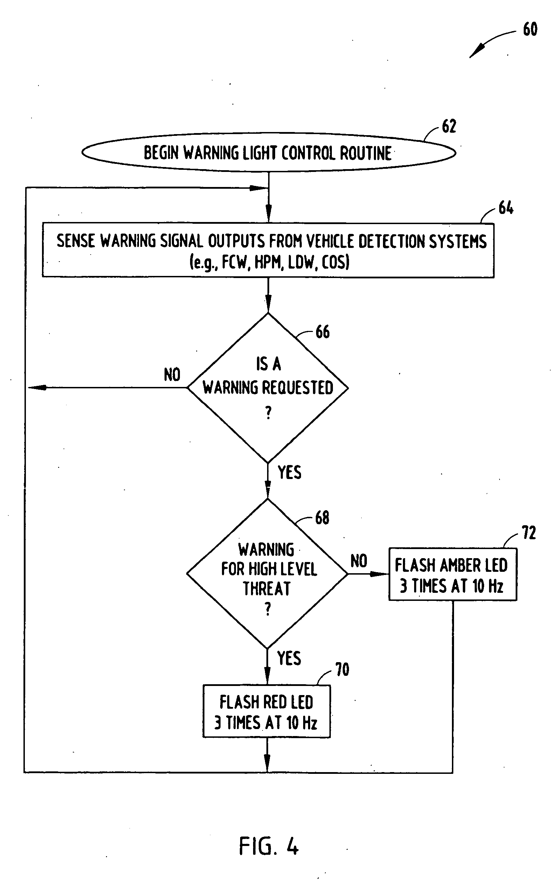

Referring to FIG. 4, the warning light control routine 60 executed by controller 30 is illustrated according to one embodiment of the present invention. The warning light control routine 60 begins at step 62 and proceeds to sense output signals from the various vehicle detection warning systems in step 64. This includes sensing output signals from the FCW, HPM, LDW and COS, as well as any other available detection systems. The routine 60 then determines if a warning is requested by any of the detection systems in decision step 66 and, if no warning is requested, returns to step 64.

If a warning has been requested, routine 60 proceeds to decision step 68 to determine if the warning is for a high level threat. If the warning is for a high level threat (e.g., more urgent threat), routine 60 flashes the red LED three times at a frequency of about 10 Hz in step 70. Otherwise, the requested warning is assumed to be a low level threat (e.g., less urgent threat), and routine 60 flashes the amber LED three times at about 10 Hz in step 72. Thereafter, routine 60 returns to step 64 to repeat sensing warning signals. The routine 60 may further employ a time delay, such as one second or longer between successive flashing cycles of the warning light beam in steps 70 and 72 so that the LED is not continuously flashed.

Accordingly, the warning light control routine 60 generates a flashing light beam of either a red or amber color on the windshield of the vehicle in a region that is viewable to the driver of the vehicle. The flashing light beam is flashed only briefly, such as like a strobe, for display in the region where the driver's attention is typically required. The generated light beam is only required to flash on rapidly for a limited time period of less than one-half second so as to get the driver's attention without distracting the driver from the driving operation. More particularly, the light beam is flashed at about one-quarter a second or less according to another embodiment. In one specific embodiment, the light beam is turned on and off cyclically three times at a frequency of about 10 Hz so as to capture the driver's attention so that the driver is directed to a location where attention needs to focused.

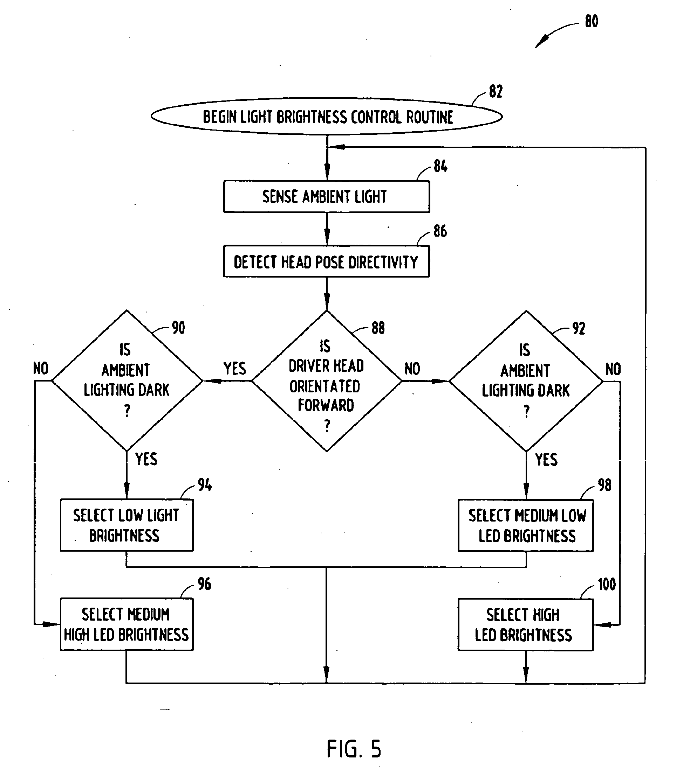

Referring to FIG. 5, the light brightness control routine 80 also executed by controller 30 is illustrated beginning at step 82. The light brightness control routine 80 senses ambient light in step 84 and detects head pose directivity of the driver of the vehicle in step 86. Next, routine 80 determines if the driver's head is oriented forward and, if so, proceeds to determine if the ambient lighting condition is darkened in decision step 90. If the driver's head is oriented forward and the ambient lighting condition is dark, routine 80 selects the lowest LED brightness in step 94. If the driver's head is oriented forward and the ambient lighting conditions are not dark, routine 80 selects a medium-high LED brightness in step 96. If the driver's head is not oriented forward and if the ambient lighting conditions are dark, as determined in step 92, routine 80 selects a medium-low LED brightness in step 98. If the driver's head is not oriented forward and the ambient lighting conditions are not dark, routine 80 selects the highest LED brightness in step 100.

Accordingly, the light brightness control routine selects one of four brightness levels for each of the LEDs dependent upon the ambient lighting conditions and detected driver head pose directivity. It should be appreciated that other numbers of levels of brightness may be employed based on ambient light, head pose directivity, and any other desired conditions.

The light warning system 20 and method 60 of the present invention advantageously provides a light warning beam for a fraction of a second in a manner that does not distract the driver's attention away from the relative optic flow looking forward for a normal driving condition. The flashing light beam 50 is sufficient to get the driver's attention, without causing undue distraction. It should be appreciated that the driver's peripheral vision will generally be receptive of a flash and is usually sensitive to abrupt changes in illumination such the natural biologically wired response for the human is to orient attention toward the source of change in the peripheral visual field. Because the light beam 50 flashes only briefly for a fraction of a second, there is generally no undue source of distraction to capture the driver's attention. Additionally, it should be appreciated that the flashing light beam 50 may flash so as to simulate the lead vehicle braking lights, according to one example. Various light warnings may be provided in different color light beams of various sizes, brightness, flashing rates, etc., to distinguish one type of warning condition from another warning condition.

## Claims

1. A light warning system (20) for a vehicle (10), said system comprising:
a lighting device (22) for generating a light beam (50) in a region viewable to a passenger (18) in a vehicle (10);
a detection device (40) for detecting a condition desirable of a warning and generating a warning signal; and
a controller (30) processing the warning signal and determining whether to present a light beam warning displayed to the driver (18), said controller (30) controlling the lighting device (22) to generate a flashing light beam (50), **characterized in that** the light beam (50) flashes on for a time period of less than one-half second; **in that** the controller (30) determines a head pose directivity of the driver, and **in that** the brightness of the lighting device (22) is selected based on the head pose directivity of the driver.

2. The light warning system as defined in claim 1, wherein the controller (30) controls the lighting device to generate a flashing light beam (50) at a rate of approximately 10 Hz.

3. The light warning system as defined in claim 1, wherein the light beam (50) flashes on for a time period of less than one-quarter second.

4. The light warning system as defined in claim 1, wherein the light beam (50) turns on and off for at least three cycles.

5. The light warning system as defined in claim 1, wherein the lighting device (22) comprises first and second differently colored lights (26 and 28) for different warning conditions.

6. The light warning system as defined in claim 1, wherein the lighting device (22) comprises a light emitting diode (26).

7. The light warning system as defined in claim 1, wherein the lighting device (22) generates a light beam (50) that is reflected off of a vehicle windshield (14) such that a passenger (18) in the vehicle (10) views the light beam (50) on the windshield (14).

8. The light warning system as defined in claim 1, wherein the lighting device (22) is mounted in a vehicle dash (12).

9. The light warning system as defined in claim 1, wherein the passenger (18) is the driver of the vehicle (10).

10. The light warning system as defined in claim 1, wherein the detection device comprises at least any one of a forward collision warning system (40), a lane departure warning system (44), a head pose monitor system (42), and a curve over-speed detection system (46).

11. The light warning system as defined in claim 1 further comprising an ambient light sensor (48) for sensing ambient light, wherein the brightness of the lighting device (22) is selected based on the sensed ambient light.

12. A method (60) of warning a driver (18) of a vehicle (10), said method comprising the steps of:
detecting (64) a condition desirable of a warning and generating a warning signal indicative thereof;
generating (70) a light beam in a region viewable to a driver (18) of the vehicle (10) upon detecting a condition desirable of a warning; and
controlling (70) the lighting device to generate a flashing light beam (50), **characterized in that** the light beam (50) flashes on for a time period less than one-half second; and by the further steps of detecting (86) head pose directivity of the driver (18); and adjusting (98) brightness of the lighting device based on head pose directivity of the driver (18).

13. The method as defined in claim 12, wherein the step of generating (70) a flashing light beam (50) comprises flashing the light beam cyclically on and off at a rate of about 10 Hz.

14. The method as defined in claim 12, wherein the step of generating (70) a flashing light beam (50) comprises flashing the lighting device on and off cyclically for at least three cycles.

15. The method as defined in claim 12 further comprising the steps of:
determining a first warning condition;
determining a second warning condition that is a more imminent threat than the first warning condition;
flashing a first lighting device (26) based on the first warning condition; and
flashing a second lighting device (28) based on the second warning condition.

16. The method as defined in claim 12 further comprising the steps of:
sensing (84) ambient light; and
adjusting (94) brightness of the lighting device based on the sensed ambient light.

## Patentansprüche

1. Lichtwarnsystem (20) für ein Fahrzeug (10), wobei das System aufweist:
eine Leuchtvorrichtung (22) zum Erzeugen eines Lichtstrahls (50) in einem Bereich, der für einen Passagier (18) in einem Fahrzeug (10) sichtbar ist;
eine Erfassungsvorrichtung (40) zum Erfassen einer Bedingung, die für ein Warnen und ein Erzeugen eines Warnsignals erwünscht ist; und
eine Steuervorrichtung (30) zum Verarbeiten des Warnsignals und Bestimmen, ob eine Lichtstrahlwarnung dem Fahrer (18) angezeigt werden soll, wobei die Steuervorrichtung (30) die Leuchtvorrichtung (22) steuert, um einen blinkenden Lichtstrahl (50) zu erzeugen,
**dadurch gekennzeichnet,**
**dass** der Lichtstrahl (50) für eine Zeitdauer strahlt, die geringer ist als eine halbe Sekunde; dass die Steuervorrichtung (30) eine Kopfpositionsausrichtung des Fahrers bestimmt, und dass die Helligkeit der Leuchtvorrichtung (22) basierend auf der Kopfpositionsausrichtung des Fahrers ausgewählt wird.

2. Lichtwarnsystem gemäß Anspruch 1, wobei die Steuervorrichtung (30) die Leuchtvorrichtung steuert, um einen blinkenden Lichtstrahl (50) mit einer Rate von ungefähr 10 Hz zu erzeugen.

3. Lichtwarnsystem gemäß Anspruch 1, wobei der Lichtstrahl (50) für eine Zeitdauer strahlt, die geringer ist als eine viertel Sekunde

4. Lichtwarnsystem gemäß Anspruch 1, wobei der Lichtstrahl (50) für zumindest drei Zyklen an und aus geht.

5. Lichtwarnsystem gemäß Anspruch 1, wobei die Leuchtvorrichtung (22) erste und zweite unterschiedlich gefärbte Lichter (26 und 28) für unterschiedliche Warnbedingungen aufweist.

6. Lichtwarnsystem gemäß Anspruch 1, wobei die Leuchtvorrichtung (22) eine Leuchtdiode (LED - light emitting diode) (26) aufweist.

7. Lichtwarnsystem gemäß Anspruch 1, wobei die Leuchtvorrichtung (22) einen Lichtstrahl (50) erzeugt, der von einer Windschutzscheibe (14) des Fahrzeugs derart reflektiert wird, dass ein Passagier (18) in dem Fahrzeug (10) den Lichtstrahl (50) auf der Windschutzscheibe (14) sieht.

8. Lichtwarnsystem gemäß Anspruch 1, wobei die Leuchtvorrichtung (22) in einem Armaturenbrett (12) des Fahrzeugs angebracht ist.

9. Lichtwarnsystem gemäß Anspruch 1, wobei der Passagier (18) der Fahrer des Fahrzeugs (10) ist.

10. Lichtwarnsystem gemäß Anspruch 1, wobei die Erfassungsvorrichtung zumindest eines aufweist aus einem Vorwärts-Kollisionswarnsystem (40), einem "Abkommen von der Fahrbahn"-Warnsystem (44), einem Kopfpositionsüberwachungssystem (42) und einem "überhöhte Geschwindigkeit in der Kurve"-Erfassungssystem (46).

11. Lichtwarnsystem gemäß Anspruch 1, das weiter aufweist einen Umgebungslichtsensor (48) zum Erfassen einer Umgebungsbeleuchtung, wobei die Helligkeit der Leuchtvorrichtung (22) basierend auf der erfassten Umgebungsbeleuchtung gewählt wird.

12. Verfahren (60) zum Warnen eines Fahrers (18) eines Fahrzeugs (10), wobei das Verfahren die Schritte aufweist:
Erfassen (64) einer Bedingung, die für ein Warnen und ein Erzeugen eines Warnsignals, das dies anzeigt, erwünscht ist;
Erzeugen (70) eines Lichtstrahls in einem Bereich, der für den Fahrer (18) des Fahrzeugs (10) sichtbar ist, bei Erfassen einer Bedingung, die für ein Warnen erwünscht ist; und
Steuern (70) der Leuchtvorrichtung, um einen blinkenden Lichtstrahl (50) zu erzeugen, **dadurch gekennzeichnet, dass** der Lichtstrahl (50) für eine Zeitdauer strahlt, die geringer ist als eine halbe Sekunde; und durch die weiteren Schritte eines Erfassens (86) einer Kopfpositionsausrichtung des Fahrers (18); und eines Anpassens (98) der Helligkeit der Leuchtvorrichtung basierend auf der Kopfpositionsausrichtung des Fahrers (18).

13. Verfahren gemäß Anspruch 12, wobei der Schritt eines Erzeugens (70) eines blinkenden Lichtstrahls (50) aufweist ein Aufleuchten des Lichtstrahls zyklisch an und aus mit einer Rate von ungefähr 10 Hz.

14. Verfahren gemäß Anspruch 12, wobei der Schritt eines Erzeugens (70) eines blinkenden Lichtstrahls (50) aufweist ein Aufleuchten des Lichtstrahls zyklisch an und aus für zumindest drei Zyklen.

15. Verfahren gemäß Anspruch 12, das weiter die Schritte aufweist:
Bestimmen einer ersten Warnbedingung;
Bestimmen einer zweiten Warnbedingung, die eine drohendere Gefährdung ist als die erste Warnbedingung;
Aufleuchten einer ersten Leuchtvorrichtung (26) basierend auf der ersten Warnbedingung; und
Aufleuchten einer zweiten Leuchtvorrichtung (28) basierend auf der zweiten Warnbedingung.

16. Verfahren gemäß Anspruch 12, das weiter die Schritte aufweist:
Erfassen (84) einer Umgebungsbeleuchtung; und
Anpassen (94) der Helligkeit der Leuchtvorrichtung basierend auf der erfassten Umgebungsbeleuchtung.

## Revendications

1. Système d'avertissement lumineux (20) pour un véhicule (10), ledit système comprenant :
un dispositif d'éclairage (22) pour générer un faisceau lumineux (50) dans une région visible à un passager (18) dans un véhicule (10) ;
un dispositif de détection (40) pour détecter une condition désirable d'un avertissement et pour générer un signal d'avertissement ; et
un contrôleur (30) qui traite le signal d'avertissement et qui détermine s'il s'agit de présenter un faisceau lumineux d'avertissement affiché au conducteur (18), ledit contrôleur (30) commandant le dispositif d'éclairage (22) pour générer un faisceau lumineux brillant (50),
**caractérisé en ce que** le faisceau lumineux (50) brille pendant une période temporelle inférieure à une demi-seconde ; **en ce que** le contrôleur (30) détermine une direction d'attitude de la tête du conducteur, et **en ce que** la luminosité du dispositif d'éclairage (22) est choisie en se basant sur la direction d'attitude de la tête du conducteur.

2. Système d'avertissement lumineux selon la revendication 1, dans lequel le contrôleur (30) commande le dispositif d'éclairage pour générer un faisceau lumineux brillant (50) à une cadence d'approximativement 10 Hz.

3. Système d'avertissement lumineux selon la revendication 1, dans lequel le faisceau lumineux (50) brille pendant une période temporelle inférieure à un quart de seconde.

4. Système d'avertissement lumineux selon la revendication 1, dans lequel le faisceau lumineux (50) est envoyé et arrêté et pendant au moins trois cycles.

5. Système d'avertissement lumineux selon la revendication 1, dans lequel le dispositif d'éclairage (22) comprend une première et une seconde lumière de coloration différente (26 et 28) pour différentes conditions d'avertissement.

6. Système d'avertissement lumineux selon la revendication 1, dans lequel le dispositif d'éclairage (22) comprend une diode électroluminescente (26).

7. Système d'avertissement lumineux selon la revendication 1, dans lequel le dispositif d'éclairage (22) génère un faisceau lumineux (50) qui est réfléchi par un pare-brise de véhicule (14) de sorte qu'un passager (18) dans le véhicule (10) voit le faisceau lumineux (50) sur le pare-brise (14).

8. Système d'avertissement lumineux selon la revendication 1, dans lequel le dispositif d'éclairage (22) est monté dans un tableau de bord de véhicule (12).

9. Système d'avertissement lumineux selon la revendication 1, dans lequel le passager (18) est le conducteur du véhicule (10).

10. Système d'avertissement lumineux selon la revendication 1, dans lequel le dispositif de détection comprend au moins un système parmi un système d'avertissement de collision à l'avant (40), un système d'avertissement (44) de déport de file, un système de surveillance de l'attitude de la tête (42), et un système de détection d'excès de vitesse en courbe (46).

11. Système d'avertissement lumineux selon la revendication 1, comprenant en outre un capteur de lumière ambiante (48) pour détecter la lumière ambiante, dans lequel la luminosité du dispositif d'éclairage (22) est choisie en se basant sur la lumière ambiante détectée.

12. Procédé (60) pour avertir un conducteur (18) d'un véhicule (10), ledit procédé comprenant les étapes consistant à :
détecter (64) une condition désirable d'un avertissement et générer un signal d'avertissement indicatif de cette condition ;
générer (70) un faisceau lumineux dans une région visible pour un conducteur (18) du véhicule (10) lors de la détection d'une condition désirable d'un avertissement ; et contrôler (70) le dispositif d'éclairage pour générer un faisceau lumineux brillant (50), **caractérisé en ce que** le faisceau lumineux (50) brille pendant une période temporelle inférieure à une demi-seconde ; et par les étapes supplémentaires consistant à détecter (86) la direction de l'attitude de la tête du conducteur (18) ; et à ajuster (98) la luminosité du dispositif d'éclairage en se basant sur la direction d'attitude de la tête du conducteur (18).

13. Procédé selon la revendication 12, dans lequel l'étape consistant à générer (70) un faisceau lumineux brillant (50) comprend de faire briller/éteindre le faisceau lumineux de manière cyclique à une cadence d'environ 10 Hz.

14. Procédé selon la revendication 12, dans lequel l'étape consistant à générer (70) un faisceau lumineux brillant (50) comprend de faire briller/éteindre le dispositif d'éclairage de manière cyclique pendant au moins trois cycles.

15. Procédé selon la revendication 12, comprenant en outre les étapes consistant à :
déterminer une première condition d'avertissement ;
déterminer une seconde condition d'avertissement qui représente une menace plus imminente que la première condition d'avertissement ;
faire briller un premier dispositif d'éclairage (26) en se basant sur la première condition d'avertissement ; et
faire briller un second dispositif d'éclairage (28) en se basant sur la seconde condition d'avertissement.

16. Procédé selon la revendication 12, comprenant en outre les étapes consistant à :
détecter (84) la lumière ambiante ; et
ajuster (94) la luminosité du dispositif d'éclairage en se basant sur la lumière ambiante détectée.
